# EUROPEAN PATENT APPLICATION

(11) **EP 4 354 645 A1**
(43) Date of publication of application: **17.04.2024**
(21) Application number: 22886024.3
(22) Date of filing: 26.10.2022
(51) Int. Cl.: H01M 50/569, H01M 10/48, H01M 50/213

(54) **BATTERY SAMPLING ASSEMBLY, CELL FIXING SUPPORT, BATTERY MODULE, AND ELECTRICAL DEVICE**

(30) Priority: 01.11.2021 CN 202122649119 U
(71) Applicant: Contemporary Amperex Technology Co., Limited, Ningde City, Fujian 352100 (CN)
(72) Inventor: XU, Wencai, Ningde City, Fujian 352100 (CN); CHEN, Guize, Ningde City, Fujian 352100 (CN)
(74) Representative: Behr, Wolfgang
(86) International application number: PCT/CN2022/127708
(87) International publication number: WO 2023/072148

(57) **Abstract**

A battery sampling assembly, a cell fixing rack, a battery module, and an electric apparatus are provided. The battery sampling assembly includes a first sampling plate (1) and a second sampling plate (2). A surface of the first sampling plate (1) is provided with at least one first conductive sheet (11) at one end and a second conductive sheet (12) at another end, and a surface of the second sampling plate (2) is provided with at least one third conductive sheet (21). In this application, the two sampling plates are separately provided with the conductive sheets, and the conductive sheets are directly welded to the surfaces of the sampling plates. Such design reduces space occupancy and allows for replacement for both wiring harness isolation and sampling wiring harnesses, so that relatively less components are used, and thus the volume of the entire module is reduced, and volumetric energy density of the battery module is increased.

## Description

This application claims priority to Chinese Patent Application No. 202122649119.X filed with the China National Intellectual Property Administration on November 01, 2021 and entitled "BATTERY SAMPLING ASSEMBLY, CELL FIXING RACK, BATTERY MODULE, AND ELECTRIC APPARATUS", which is incorporated herein by reference in its entirety.

### TECHNICAL FIELD

Embodiments of this application relate to the field of battery module technologies, and in particular, to a battery sampling assembly, a cell fixing rack, a battery module, and an electric apparatus.

### BACKGROUND

Under the pressure of energy crisis and environmental pollution, safety, environmental protection, and energy conservation have become the themes of today's development. With the advantages of energy conservation, environmental friendliness, and no pollution, electrical energy has been highly valued by the transportation and energy sectors. In recent years, the new energy industry has experienced explosive growth. As a power core, batteries play a vital role in the entire field of electric vehicles. For example, a battery system of an electric vehicle typically includes multiple battery cells that are connected in series or parallel to form a battery module.

Battery modules have a large number of various components, so their manufacturing is complicated, resulting in a low automation degree and a need of lots of manual work, thus leading to problems of low production efficiency, poor manufacturability, and low volumetric energy density.

### TECHNICAL PROBLEMS

This application is intended to overcome the foregoing shortcomings and provide a battery sampling assembly, a cell fixing rack, a battery module, and an electric apparatus. The battery sampling assembly replaces wiring harness isolation and sampling wiring harnesses, such that relatively less components are used, reducing the volume of the entire module and thus increasing the volumetric energy density of the battery module.

### TECHNICAL SOLUTIONS

According to a first aspect, this application provides a battery sampling assembly including a first sampling plate and a second sampling plate. A surface of the first sampling plate is provided with at least one first conductive sheet at one end and a second conductive sheet at another end, and a surface of the second sampling plate is provided with at least one third conductive sheet.

In this technical solution of the embodiments of this application, the two sampling plates are separately provided with conductive sheets, and the conductive sheets are directly welded to the surfaces of the sampling plates. Such design reduces space occupancy and allows for replacement for both wiring harness isolation and sampling wiring harnesses, so that relatively less components are used, and thus the volume of the entire module is reduced. Moreover, no complicated assembly is required, and simple welding can be operated using a machine, thereby reducing lots of manual work and improving production efficiency.

In some embodiments, the first sampling plate is provided with at least one first opening in an end face, and an end of the first conductive sheet is disposed on the first opening. The first opening provided in the first sampling plate allows for electrical connection of an end of the first conductive sheet through the first opening, as well as a relatively reduced thickness of the sampling assembly.

In some embodiments, the second sampling plate is provided with at least one second opening in an end face, and an end of the third conductive sheet is embedded into the second opening. The second opening provided in the second sampling plate allows for electrical connection of an end of the third conductive sheet through the second opening, as well as a relatively reduced thickness of the sampling assembly.

In some embodiments, the second conductive sheet and the third conductive sheet are provided with concave grooves matching a joint between the second conductive sheet and the first sampling plate and a joint between the third conductive sheet and the second sampling plate respectively; or the second conductive sheet and the third conductive sheet are provided with convex grooves matching a joint between the second conductive sheet and the first sampling plate and a joint between the third conductive sheet and the second sampling plate respectively. By virtue of the concave grooves and convex grooves, the second conductive sheet and the third conductive sheet can be well welded to the sampling plates; and in addition, two end faces of the second conductive sheet and third conductive sheet can be located on a same horizontal plane as the surfaces of the sampling plates, thereby reducing the volume of the sampling assembly.

In some embodiments, the first sampling plate, the second sampling plate, and the first conductive sheet are each provided with a mounting hole. This facilitates better fixation for the sampling plate assemblies so as to avoid displacement of the assemblies after mounting, and also allows the first sampling plate to be fixed via the first conductive sheet.

In some embodiments, the first conductive sheet, the second conductive sheet, and the third conductive sheet are each provided with several connecting holes. This facilitates connection to a power source for charging.

In some embodiments, the first sampling plate and the second sampling plate are both PCBA (Printed Circuit Board Assembly, printed circuit board assembly) integrated circuit boards. With the use of the PCBA integrated circuit boards for sampling, wiring harness isolation and sampling wiring harnesses can be replaced, so that relatively less components are used.

According to a second aspect, this application provides a cell fixing rack for mounting and fixing a battery sampling assembly. The cell fixing rack includes a rack body and several groups of fixing holes. Each group of fixing holes includes two fixing holes in communication with each other, where one fixing hole is provided in one end of the rack body, and the other fixing hole is provided in another end of the rack body. The fixing holes are each provided with a glue obstructing sleeve along an edge.

In this technical solution of the embodiments of this application, the rack body is provided with fixing holes, and the fixing holes are each provided with a glue obstructing sleeve along an edge to prevent overflow of glue and also avoid the problem that glue is likely to flow out along an elongated fixing rack after the rack is glued.

In some embodiments, the rack body is a hollow structure, and a side wall of the rack body is provided with a filling opening. This facilitates direct filling of glue into the rack body through the filling opening, and fixation is not required after the surface of the rack is glued.

In some embodiments, the bottoms of two sides of the rack body are each provided with a third opening. To allow the rack body to be placed into a housing, during glue filling, the glue flows out of the third opening so as to be tightly connected to an inner wall of the housing, thus preventing the rack body from shaking inside the housing.

In some embodiments, the rack body is provided with fixing rods, and the fixing rods and the fixing holes are located at two same ends of the rack body. The fixing rods are used for limiting the sampling plates, thereby avoiding falling or damage of the sampling plates caused by displacement of the sampling plates.

According to a third aspect, this application provides a battery module including a fixing rack, a cell assembly, and sampling assemblies. The cell assembly is disposed in the fixing rack. The cell assembly includes at least one cell. The sampling assemblies are disposed at two ends of the cell assembly respectively.

In this technical solution of the embodiments of this application, the cell is mounted in the rack body through the fixing holes, and glue filling is performed for fixing the cell. The glue obstructing sleeve can prevent the glue from overflowing to a pole of the cell while such overflow causes pollution to the pole surface of the cell and impact on welding reliability and in turn impacts manufacturability. Subsequently, battery assemblies are separately welded to the two ends of the cell, thus not only replacing wiring harness isolation and sampling wiring harnesses, but also relatively reducing the volume of a mold.

In some embodiments, an end of the first conductive sheet is fixed to a top end of the fixing rack, and the first sampling plate and the second sampling plate are separately mounted onto the rack body through the fixing rods passing through the mounting holes. An end of the first conductive sheet is fixed to the rack body, and then the sampling plates are mounted onto the fixing rods through the mounting holes for fixation and position limitation, so that the sampling plates are closer to the cell, reducing the volume of the module.

In some embodiments, the first conductive sheet and the second conductive sheet are fixed to one end of the cell, and the third conductive sheet is fixed to the other end of the cell. The conductive plates are separately welded to the two ends of the cell, the sampling plates are electrically connected to the cell, and then multiple cells are connected through the multiple conductive plates. In this way, overall sampling is implemented by the sampling plates without the need for combination of multiple components, achieving simple manufacturing.

According to a fourth aspect, this application provides an electric apparatus including the battery module in the foregoing embodiments. The foregoing description is merely an overview of the technical solutions of this application. For a better understanding of the technical means in this application such that they can be implemented according to the content of the specification, and to make the above and other objectives, features, and advantages of this application more obvious and easier to understand, the following describes embodiments of this application.

By adopting the foregoing technical solutions, this application has the following beneficial effects.
1. In this application, the two sampling plates are separately provided with the conductive sheets, and the conductive sheets are directly welded to the surfaces of the sampling plates. Such design reduces space occupancy and allows for replacement for both wiring harness isolation and sampling wiring harnesses, so that relatively less components are used, and thus the volume of the entire module is reduced, and volumetric energy density of the battery module is increased. Moreover, no complicated assembly is required, and simple welding can be operated using a machine, thereby reducing lots of manual work and improving production efficiency.
2. In this application, the cell is mounted in the fixing rack through the fixing holes, and glue filling is performed for fixing the cell; the glue obstructing sleeve can prevent the glue from overflowing to a pole of the cell while such overflow causes pollution to the pole surface of the cell and impact on welding reliability and in turn impacts manufacturability; and subsequently, battery assemblies are separately welded to the two ends of the cell, thus not only replacing both wiring harness isolation and sampling wiring harnesses, but also relatively reducing the volume of a mold.

It should be understood that the foregoing general description and the following detailed description are merely illustrative and explanatory, and are not intended to limit this application.

Undoubtedly, such purpose and other purposes of this application become more obvious in the detailed description of preferred embodiments described with reference to various accompanying drawings below.

To make the foregoing objectives, features, and advantages of this application clearer and more understandable, examples are given hereinafter, and the detail description is made as below with reference to the accompanying drawings and diagrams.

### BRIEF DESCRIPTION OF DRAWINGS

The accompanying drawings are intended for better understanding of this application and constitute a part of this application, and are intended to interpret this application together with the embodiments of this application without constituting any limitation on this application.

In the accompanying drawings, the same reference signs represent the same components, and the accompanying drawings are illustrative and may not necessarily be drawn to scale.

To describe the technical solutions in the embodiments of this application or in the prior art more clearly, the following briefly describes the accompanying drawings required for describing the embodiments or the prior art. Apparently, the accompanying drawings in the following description show merely some of the embodiments of this application, and persons of ordinary skill in the art may still derive other drawings from these accompanying drawings without creative efforts.
FIG. 1 is a schematic structural diagram of a battery sampling assembly according to some embodiments of this application;
FIG. 2 is a schematic structural diagram of a fixing rack according to some embodiments of this application;
FIG. 3 is a schematic structural diagram of a battery module according to some embodiments of this application; and
FIG. 4 is an exploded view of a structure of a battery module according to some embodiments of this application.

Description of reference signs:
1. first sampling plate; 11. first conductive sheet; 12. second conductive sheet; 13. first opening; 2. second sampling plate; 21. third conductive sheet; 22. second opening; 3. mounting hole; 4. connecting hole; 5. rack body; 51. fixing hole; 52. glue obstructing sleeve; 53. filling opening; 54. third opening; 55. fixing rod; 6. cell; and 7. concave groove.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitation on the protection scope of this application.

Unless otherwise defined, all technical and scientific terms used herein shall have the same meanings as commonly understood by those skilled in the art to which this application relates. The terms used herein are intended to merely describe the embodiments rather than to limit this application. The terms "include", "comprise", and any other variations thereof in the specification, claims and brief description of drawings of this application are intended to cover non-exclusive inclusions.

In the description of the embodiments of this application, the technical terms "first", "second" and the like are merely intended to distinguish between different objects, and shall not be understood as any indication or implication of relative importance or any implicit indication of the number, particular sequence or primary-secondary relationship of the technical features indicated. In the description of the embodiments of this application, "multiple" means at least two unless otherwise specifically defined.

In this specification, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, or may be an internal communication between two components or an interactive relationship between two components. Persons of ordinary skill in the art can understand meanings of these terms in the embodiments of this application as appropriate to situations.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also expanding.

The inventors have noted that a module has a large number of various components. In some cases, electrical connection of most of sampling assemblies with injection-molded wiring harnesses are generally implemented through traditional wiring harness ultrasonic welding. However, low automation degree of wiring harness welding not only results in a need for lots of manual work but also leads to low production efficiency. Most of sampling wiring harnesses and aluminum bars are fastened to isolating plates using injection-molded fasteners. In this way, the surfaces of the fasteners need to be about 2 mm higher than the surfaces of the aluminum bars, such that the upper and lower isolating plates are expectedly heightened by a total of 4 mm, and this ultimately results in a relatively large volume of the battery module, thereby reducing the volumetric energy density of the battery module.

In addition, during mounting of a cell in a battery module currently, an elongated fixing rack is typically glued for fixing the cell, but this results in flowing of glue along the rack and the surface of the cell to the pole of the cell, causing pollution to the pole surface of the cell and impact on welding reliability, and in turn impacting the manufacturability of the battery module.

To resolve the problems of low production efficiency, poor manufacturability, and low volumetric energy density of the battery module, the applicant has found through research that the wiring harness isolation and sampling wiring harnesses can be replaced with a PCBA. Specifically, the PCBA and an aluminum bar are welded to form an integrated PCBA, reducing the height of the sampling assembly, thus reducing the height of the module, increasing the volumetric energy density of the module, and also reducing welding of wiring harnesses. Moreover, the integrated assembly improves the production efficiency of the battery module.

The PCBA is formed in a process as follows: a PCB (Printed Circuit Board, printed circuit board) is used as a raw material; electronic elements such as an IC (Integrated Circuit, integrated circuit) chip, a resistor, a capacitor, a crystal oscillator, and a transformer are welded and assembled onto the PCB through SMT (Surface Mounted Technology, surface mounted technology) or plug-in processing; and a structure obtained is heated at a high temperature in a reflow oven to establish mechanical connection between the electronic elements and the PCB, and then the PCBA is formed.

However, in consideration of the problem that during mounting of a cell, an elongated fixing rack is glued for fixing the cell, but this results in flowing of the glue along the rack and the surface of the cell to the pole of the cell, causing pollution to the pole surface of the cell, a fixing rack is adopted, where a rack body is a hollow structure, the rack body is provided with fixing holes for mounting the cell, and a glue obstructing sleeve is provided along an edge of the fixing hole, and the glue obstructing sleeve is closely attached to the cell, so as to better fix the cell as well as to prevent pollution on the pole of the cell caused by overflowing of the glue from the fixing holes.

The battery module disclosed in the embodiments of this application may be used in but not limited to electric apparatuses such as vehicles, ships, or aircrafts. The battery sampling assembly, battery assembly, and fixing rack disclosed in this application may be used for forming a power supply module of a power system. This helps to reduce space occupancy and allows for replacement for both wiring harness isolation and sampling wiring harnesses, so that relatively less components are used, and thus the volume of the entire module is reduced, and the volumetric energy density of the battery module is increased. Moreover, no complicated assembly is required, and simple welding can be operated using a machine, thereby reducing lots of manual work and improving the production efficiency.

An embodiment of this application provides a battery module, which may be but is not limited to an electric toy, an electric bicycle, an electric car, a ship, or a spacecraft. The electric toy may include a fixed or mobile electric toy, for example, an electric toy car, an electric toy ship, and an electric toy aircraft. The spacecraft may include an aircraft, a rocket, a space shuttle, a spaceship, and the like.

The following describes specific embodiments of this application with reference to the accompanying drawings.

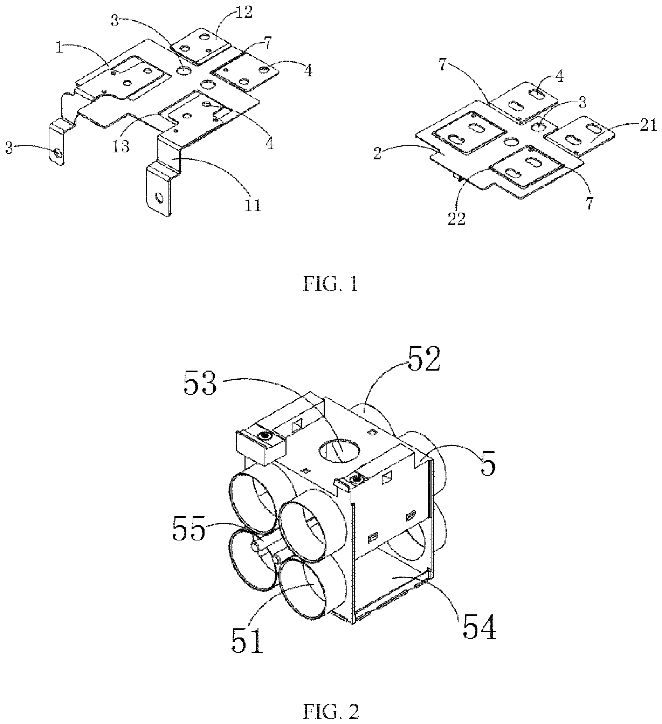

According to some embodiments of this application, referring to FIG. 1, FIG. 1 is a schematic structural diagram of a battery sampling assembly of this application.

This application provides a battery sampling assembly including a first sampling plate 1 and a second sampling plate 2. A surface of the first sampling plate 1 is provided with at least one first conductive sheet 11 at one end and a second conductive sheet 12 at another end, and a surface of the second sampling plate 2 is provided with at least one third conductive sheet 21.

The first conductive sheet 11, the second conductive sheet 12, and the third conductive sheet 21 are configured for parallel connection and electrical conduction of one cell 6 or multiple cells 6, and then allowing the sampling plates to implement sampling. In addition, the conductive sheets are made of conductive materials such as aluminum bars or copper bars, preferably aluminum bars with low manufacturing costs, so that the sampling assembly has less components and also replaces wiring harness isolation and sampling wiring harnesses. The sampling plates refer to battery protection plates that are circuit boards for preventing explosion caused by overcharge, overcurrent, short circuit, or overdischarge of a battery.

The first conductive sheet 11 and the second conductive sheet 12 are fixed to the first sampling plate 2 through welding; and the first conductive sheet 11 and the second conductive sheet 12 come into contact with poles at a same end of one or more cells 6 for parallel connection, such that the first sampling plate 1 is electrically connected to the cell 6. Similarly, one or more third conductive sheets 21 are connected to one or more cells 6 for parallel connection, such that the second sampling plate 2 is electrically connected to the cell 6. Then, the first sampling plate 1 and the second sampling plate 2 implement the overall sampling.

According to some embodiments of this application, optionally, the first sampling plate 1 is provided with at least one first opening 13 in an end face, and an end of the first conductive sheet 11 is disposed on the first opening 13.

The first opening 13 is configured for allowing an end of the first conductive sheet 11 to come into contact with a pole of the cell 6. In addition, the provision of the first opening 13 allows the first conductive sheet 11 to be conveniently welded to the pole of the cell 6, thus reducing the overall thickness of the sampling assembly.

According to some embodiments of this application, optionally, the second sampling plate 2 is provided with at least one second opening 22 in an end face, and an end of the third conductive sheet 21 is embedded into the second opening 22.

The second opening 21 is configured for allowing an end of the third conductive sheet 22 to come into contact with the pole of the cell 6. In addition, the provision of the second opening 22 allows the third conductive sheet 22 to be conveniently welded to the pole of the cell 6, thus further reducing the overall thickness of the sampling assembly.

According to some embodiments of this application, optionally, the second conductive sheet 12 and the third conductive sheet 21 are provided with concave grooves 7 matching a joint between the second conductive sheet 12 and the first sampling plate 1 and a joint between the third conductive sheet 21 and the second sampling plate 2 respectively.

The second conductive sheet 12 and the third conductive sheet 21 are elongated aluminum bars, so that multiple cells 6 can be arranged in parallel, and then concave grooves 7 or convex grooves are provided at the joint between the first sampling plate 1 and the second conductive sheet 12 and the joint between the second sampling plate 2 and the third conductive sheet 21 respectively, for achieving better fixation to the sampling plates. In addition, only the positions at the concave grooves or convex grooves have a thickness equal to a total thickness of the sampling plates and the conductive sheets, while the other positions of the conductive sheets are on a same horizontal plane as the sampling plates, thus reducing the volume.

According to some embodiments of this application, optionally, the first sampling plate 1, the second sampling plate 2, and the first conductive sheet 11 are each provided with a mounting hole 3.

The mounting hole 3 is configured for fixation and position limitation. The sampling plates are provided with multiple mounting holes 3 for reinforcing the fixation of the sampling plates as well as for position limitation, thus avoiding a situation that the cell 6 cannot be well protected due to displacement of the sampling plates.

According to some embodiments of this application, optionally, the first conductive sheet 11, the second conductive sheet 12, and the third conductive sheet 21 are each provided with several connecting holes 4.

The connecting holes 4 correspond to electrode holes of the cell 6 in position and number, so that when the conductive sheets are welded to the two ends of the cell 6, the conductive sheets are prevented from shielding the electrode holes while such shielding causes failure of corresponding operations such as subsequent charging and connection.

According to some embodiments of this application, optionally, the first sampling plate 1 and the second sampling plate 2 are both PCBA (Printed Circuit Board Assembly, printed circuit board assembly) integrated circuit boards.

PCBA boards are characterized by having advantages such as small size, light weight, few leads and welding points, long service life, high reliability, and good performance, as well as low costs, facilitating large-scale production. PCBA boards are widely used not only in industrial and civil electronic devices such as radios, televisions, and computers, but also in military, communication, and remote control application. Compared with the use of transistors, the use of integrated circuits for assembly of electronic devices can increase the assembly density of the electronic devices by several tens to thousands of times and also greatly prolong stable operating time of the devices.

The PCBA boards used have the characteristics of small size, light weight, and low costs, thus can well reduce the overall volume of the sampling assembly, and are also convenient to produce, thereby improving the operating efficiency.

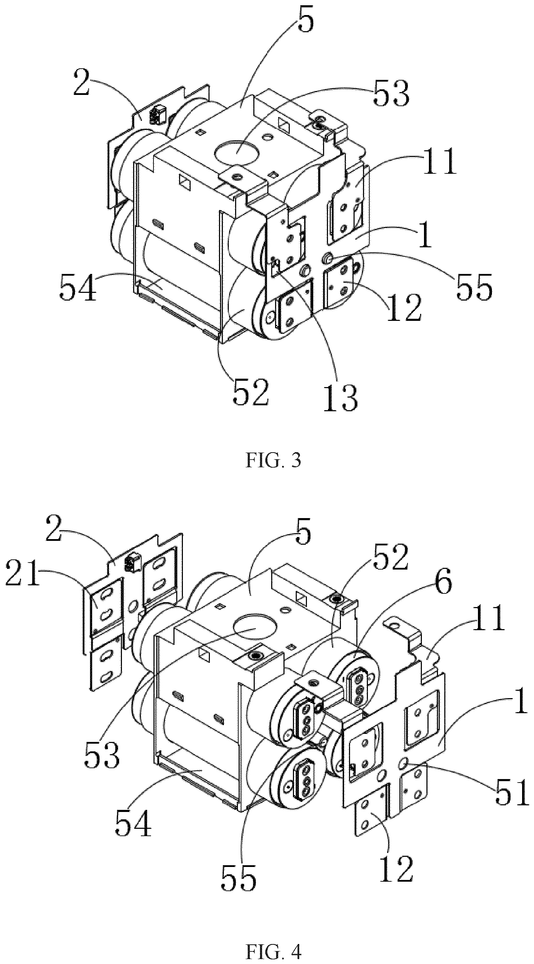

According to some embodiments of this application, referring to FIG. 2 and FIG. 3, FIG. 2 is a schematic structural diagram of a fixing rack of this application, and FIG. 3 is a schematic structural diagram of a battery module of this application.

This application further provides a cell fixing rack for mounting and fixing a battery sampling assembly. The cell fixing rack includes a rack body 5 and several groups of fixing holes 51. Each group of fixing holes 51 includes two fixing holes 51 in communication with each other, where one fixing hole 51 is provided in one end of the rack body 5, and the other fixing hole 51 is provided in another end of the rack body 5. The fixing holes 51 are each provided with a glue obstructing sleeve 52 along an edge.

The several groups of fixing holes 51 mean that multiple fixing holes 51 are divided into several groups. "Several" includes a case of at least two groups. Each group of fixing holes 51 including two fixing holes 51 in communication with each other means that after the multiple fixing holes 51 are divided into groups, each group includes two fixing holes 51, and the two fixing holes 51 are in communication with each other.

The rack body 5 is square or in a shape matching a housing supporting the fixing rack. In an example in which the rack body 5 is square, two ends of the rack body 5 refer to two corresponding surfaces among four surfaces of side walls of the square rack body 5.

The cell 6 is fixed to the rack body 5 by passing through corresponding fixing holes 51 in the two ends. The glue obstructing sleeve 52 provided along the edge of the fixing hole 51 matches the cell 6, enabling an inner wall of the glue obstructing sleeve 52 to be closely attached to an outer wall of the cell 6, and thus the cell 6 can be fixed. During mounting of the cell 6, glue filling is also required for reinforcing the fixation of the cell 6. However, to prevent the glue from flowing to the pole along the outer wall of the cell 6, the glue obstructing sleeve 52 is provided for preventing overflow of the glue.

According to some embodiments of this application, optionally, the rack body 5 is a hollow structure and is provided with a filling opening 53 in the top.

The rack body 5 is hollow inside, so that when glue fills into the rack body 5 through the filling opening 53, an outer wall, inside the rack body 3, of the cell 6 can be quickly covered by the glue, allowing the cell 6 to be fixed. In this way, manual gluing is not needed, and direct glue filling is adopted, improving the production efficiency.

According to some embodiments of this application, optionally, the bottoms of two sides of the rack body 5 are each provided with a third opening 54.

The two sides of the rack body 5 refer to the other two corresponding surfaces among the four surfaces of the side walls of the square rack body 5. The third opening 54 is configured for the glue to flow out. When the rack body 5 is placed in a corresponding housing, the glue flowing out is shielded by an inner wall of the housing, such that the rack body 5 is firmly fixed inside the housing through the glue, thus avoiding shaking of the rack body 5 inside the housing.

According to some embodiments of this application, optionally, the rack body 5 is provided with fixing rods 55, and the fixing rods 55 and fixing holes 51 are located at two same ends of the rack body 5.

The fixing rods 55 are fixed to two same ends of the rack body 5 as the fixing holes 51, to allow the sampling plates to be mounted on the fixing rods 55 and also to allow the conductive sheets to be aligned to the two ends of the cell 6 for welding.

According to some embodiments of this application, referring to FIG. 3 and FIG. 4, FIG. 3 is a schematic structural diagram of a battery module of this application, and FIG. 4 is an exploded view of a structure of a battery module of this application.

This application further provides a battery module including a fixing rack, a cell assembly, and sampling assemblies. The cell assembly is disposed in the fixing rack. The cell assembly includes at least one cell 6. The sampling assemblies are disposed at two ends of the cell assembly respectively.

The cell 6 is mounted in the rack body 5. 3, 4, more, or less cells 6 may be mounted. Corresponding mounting is performed according to an actual number of the cell 6 to be mounted in the rack body 5. Subsequently, the sampling assemblies are mounted at the two ends of the cell 6, then the cell 6 is placed into a housing, and then glue filling is performed for fixing the cell 6. Such simple manufacturing can improve the production efficiency. In addition, the small number of the components reduces the volume of the module and increases the volumetric energy density of the module.

The battery module may be any one of the foregoing devices using a battery.

According to some embodiments of this application, optionally, an end of the first conductive sheet 11 is fixed to a top end of the rack body 5, and the first sampling plate 1 and the second sampling plate 2 are separately mounted onto the rack body 5 through the fixing rods 55 passing through the mounting holes 3. The fixing rods 55 are used for fixing and limiting the sampling plates, thus avoiding displacement of the sampling plates.

According to some embodiments of this application, optionally, the first conductive sheet 11 and the second conductive sheet 12 are fixed to one end of the cell 6, and the third conductive sheet 21 is fixed to the other end of the cell 6. The conductive sheets are directly welded by laser to the two ends of the cell 6, achieving good fixation. In addition, the sampling plates are electrically connected to the cell 6 through the conductive sheets, achieving a simple manufacturing process.

According to some embodiments of this application, referring to FIG. 1 to FIG. 3, FIG. 1 is a schematic structural diagram of a battery sampling assembly according to some embodiments of this application, FIG. 2 is a schematic structural diagram of a fixing rack according to some embodiments of this application, and FIG. 3 is a schematic structural diagram of a battery module according to some embodiments of this application.

This application provides a cylindrical battery module. Four cells 6 are mounted in a rack body 5. Two ends of the cells 6 are respectively provided with a first sampling plate 1 and a second sampling plate 2. Two first conductive members 11 and one second conductive member 12 are welded to the first sampling plate 1. The first conductive members 11 and the second conductive member 12 are aligned and laser-welded to one end of the four cells 6, respectively. Two third conductive members 21 are welded to the second sampling plate 2, and the third conductive members 21 are welded by laser to the other end of the cells 6. The cylindrical battery module includes two PCBA integrated sampling assemblies and one box-type cell fixing rack that is filled with glue for fixing the cells. The PCBA sampling assemblies are electrically connected to the cells by laser welding to implement sampling. The PCBA sampling assembly includes a PCBA (Printed Circuit Board Assembly, printed circuit board assembly) integrated circuit board and an aluminum bar that are welded for fixation and sampling, achieving high space utilization, use of fewer components, and high production efficiency. In addition, the box-type cell fixing rack is provided with two glue obstructing sleeves 52 for preventing glue from overflowing to anywhere while such overflow causes pollution to pole surfaces of the cells 6, thus improving manufacturability by welding, and improving the production efficiency by adopting direct glue filling instead of manual gluing.

This application further provides an electric apparatus including the battery module in the foregoing embodiments.

The electric apparatus may be any one of the foregoing devices or systems using a battery.

It should be understood that the embodiments disclosed in this application are not limited to specific processing steps or materials disclosed herein but should be extended to equivalent alternatives of such features as understood by persons of skilled in the related field. It should also be understood that the terms used herein are merely for description of specific embodiments rather than limitation.

In this specification, reference to "embodiment" means that specific features or characteristics described with reference to the embodiment may be incorporated in at least one embodiment of this application. Therefore, the phrase or "embodiment" mentioned in various places throughout the specification do not necessarily refer to the same embodiment.

In addition, the features or characteristics described may be combined in one or more embodiments in any other appropriate manner. In the foregoing description, some details such as thickness and number are provided for comprehensive understanding of the embodiments of this application. However, persons skilled in the related field understand that this application can be implemented without the foregoing one or more details or implemented using other methods, assemblies, materials, and the like.

## Claims

1. A battery sampling assembly, comprising:
a first sampling plate (1), its surface being provided with at least one first conductive sheet (11) at one end and a second conductive sheet (12) at another end; and
a second sampling plate (2), its surface being provided with at least one third conductive sheet (21).

2. The battery sampling assembly according to claim 1, wherein the first sampling plate (1) is provided with at least one first opening (13) in an end face, and an end of the first conductive sheet (11) is disposed on the first opening (13).

3. The battery sampling assembly according to claim 1, wherein the second sampling plate (2) is provided with at least one second opening (22) in an end face, and an end of the third conductive sheet (21) is embedded into the second opening (22).

4. The battery sampling assembly according to claim 1, wherein the second conductive sheet (12) and the third conductive sheet (21) are provided with concave grooves (7) matching a joint between the second conductive sheet (12) and the first sampling plate (1) and a joint between the third conductive sheet (21) and the second sampling plate (2) respectively; or
the second conductive sheet (12) and the third conductive sheet (21) are provided with convex grooves matching a joint between the second conductive sheet (12) and the first sampling plate (1) and a joint between the third conductive sheet (21) and the second sampling plate (2) respectively.

5. The battery sampling assembly according to claim 1, wherein the first sampling plate (1), the second sampling plate (2), and the first conductive sheet (11) are each provided with a mounting hole (3).

6. The battery sampling assembly according to claim 1, wherein the first conductive sheet (11), the second conductive sheet (12), and the third conductive sheet (21) are each provided with several connecting holes (4).

7. The battery sampling assembly according to any one of claims 1 to 6, wherein the first sampling plate (1) and the second sampling plate (2) are both PCBA integrated circuit boards.

8. A cell fixing rack, wherein the cell fixing rack is configured for mounting and fixing the battery sampling assembly according to any one of claims 1 to 7; and the cell fixing rack comprises a rack body (5) and several groups of fixing holes (51), wherein each group of fixing holes (51) comprises two fixing holes (51) in communication with each other, with one fixing hole (51) provided in one end of the rack body (5), and the other fixing hole (51) provided in another end of the rack body (5), and the fixing holes (51) are each provided with a glue obstructing sleeve (52) along an edge.

9. The cell fixing rack according to claim 8, wherein the rack body (5) is a hollow structure, and a side wall of the rack body is provided with a filling opening (53).

10. The cell fixing rack according to claim 9, wherein the bottoms of two sides of the rack body (5) are each provided with a third opening (54).

11. The cell fixing rack according to claim 8, wherein end faces, in which the fixing holes (51) are provided, of the rack body (5) are each provided with a fixing rod (55).

12. A battery module, comprising:
a fixing rack;
a cell assembly disposed in the fixing rack, wherein the cell assembly comprises at least one cell (6); and
sampling assemblies disposed at two ends of the cell assembly respectively; wherein
the fixing rack is the cell fixing rack according to any one of claims 8 to 11, and the sampling assembly is the battery sampling assembly according to any one of claims 1 to 7.

13. The battery module according to claim 12, wherein the first sampling plate (1), the second sampling plate (2), and the first conductive sheet (11) are each provided with a mounting hole (3); end faces, in which the fixing holes (51) are provided, of the rack body (5) are each provided with a fixing rod (55); an end of the first conductive sheet (11) is fixed to a top end of the rack body (5); and the first sampling plate (1) and the second sampling plate (2) are separately mounted onto the rack body (5) through the fixing rods (55) passing through the mounting holes (3).

14. The battery module according to claim 12, wherein the first conductive sheet (11) and the second conductive sheet (12) are fixed to one end of the cell (6), and the third conductive sheet (21) is fixed to the other end of the cell (6).

15. An electric apparatus, comprising the battery module according to any one of claims 12 to 14.
